# EUROPEAN PATENT SPECIFICATION

(11) **EP 0 989 299 B1**
(45) Date of publication and mention of the grant of the patent: **16.04.2003**
(21) Application number: 99117142.2
(22) Date of filing: 31.08.1999
(51) Int. Cl.: F02N 11/08, B60K 26/00, B60K 41/26

(54) **Vehicular engine control apparatus**
Steuerungsvorrichtung für einen Kraftfahrzeugmotor
Dispositif de contrôle d'un moteur de véhicule

(30) Priority: 18.09.1998 JP 26551298
(43) Date of publication of application: 29.03.2000
(73) Proprietor: TOYOTA JIDOSHA KABUSHIKI KAISHA, Aichi-ken 471-8571 (JP)
(72) Inventor: Tabata, Atsushi, Toyota-shi, Aichi-ken, 471-8571 (JP); Kuramochi, Kojiro, Toyota-shi, Aichi-ken, 471-8571 (JP); Nagano, Shuji, Toyota-shi, Aichi-ken, 471-8571 (JP)
(74) Representative: Pellmann, Hans-Bernd, Dipl.-Ing.

(56) References cited:
- US-A- 4 286 683
- US-A- 5 168 975

## Description

### BACKGROUND OF THE INVENTION

### 1. Field of the invention

The present invention relates to a vehicular engine control apparatus capable of automatically changing the state of an engine of a vehicle between a stopped state and an operating state on the basis of a predetermined condition.

### 2. Description of the Related Art

Control apparatuses for reducing fuel consumption, exhaust emissions and noises in engine-equipped vehicles have recently been proposed which are capable of automatically stopping an engine on the basis of predetermined stop conditions and automatically returning the engine state from the stopped state to an operating state on the basis of predetermined return conditions.

An example of such control apparatuses is described in JP 9-310629. The control apparatus described in this Japanese patent application is designed for a vehicle equipped with an automatic transmission. As examples of the condition for automatically stopping the engine of the vehicle while a travel position of the automatic transmission is selected, the patent application mentions engagement of the parking brake mechanism, the duration of a vehicle stop, operation of a manual engine stop switch, and the like. As examples of the condition for restarting the engine, the application mentions disengagement of the parking brake mechanism, closure of a door for a driver or a passenger, the turning off of the manual engine stop switch, and the like.

With this apparatus, the engine can be automatically stopped for a relatively limited time or automatically started for a takeoff of the vehicle merely by a driver operating a related device, such as the engine stop switch or the like, while leaving the shift lever at a travel position. Therefore, the apparatus simplifies the operations needed for the driver to perform, and reduces unnecessary fuel consumption.

The automatic transmission suitable for the aforementioned control apparatus is, for example, an automatic transmission having a gear transmission mechanism, various friction engagement devices for changing the torque transmission path in the gear transmission mechanism, and a hydraulic pressure control device for controlling the fluid pressures on pistons that actuate the friction engagement devices. The source pressure delivered to the fluid passages of the hydraulic pressure control device is generated by an oil pump provided as a pressure source. In the thus-constructed automatic transmission, the source pressure generated by the oil pump is regulated, and regulated pressures are applied to the pistons so that suitable friction engagement devices become engaged.

Some vehicles capable of performing automatic engine stop control and automatic engine restart control while a travel position of the automatic transmission is selected adopt a construction in which the oil pump is driven by the engine power. When the engine is automatically stopped in such vehicles, the oil pump stops, so that the piston hydraulic pressures decrease and the friction engagement devices become released.

If the engine is returned from the automatically stopped state to the operating state upon establishment of a predetermined return condition, for example, depression of an accelerator pedal or the like, engagement of the friction engagement devices may possibly delay, that is, the friction engagement devices may possibly become engaged after a rise in the engine operating speed. Therefore, there is a possibility of an engagement shock and a reduction in durability of the friction engagement devices. To cope with this drawback, it may be considered that torque-down control of the engine is performed before the automatic return from the stopped state to the operating state of the engine by performing control of the opening of an electronic throttle valve, or ignition timing delay control, or other methods.

However, the torque-down control may be restricted in some cases due to a system failure or other conditions. If the engine state is automatically returned from the stopped state to the operating state under such a condition, the aforementioned problem inevitably occurs.

### SUMMARY OF THE INVENTION

Accordingly, it is an object of the present invention to provide a vehicular engine control apparatus for a vehicle in which the engine state can be automatically changed between a stopped state and an operating state, the vehicular engine control apparatus being capable of avoiding an engagement shock of a friction engagement device at the time of a takeoff of the vehicle even if engine torque control is impossible and being capable of increasing durability of the friction engagement device.

In accordance with the invention, a vehicular engine control apparatus for a vehicle wherein an engine is automatically stopped upon establishment of a predetermined stop condition, and the engine is restarted from an automatically stopped state upon establishment of a predetermined restart condition, and wherein at the time of restart of the engine, a torque of the engine is transmitted by engaging a clutch provided in a torque transmission path, comprising: an engine torque control means for controlling the torque of the engine; a torque control determining means for determining whether it is possible to control the torque of the engine by using the engine torque control means; and an engine control means for discontinuing or prohibiting an automatic stop of the engine if it is determined by the torque control determining means that it is impossible to control the torque of the engine.

In this invention, it is determined whether it is possible to control the engine torque, and the state of the engine is controlled on the basis of the result of the determination. For example, if it is determined that it is impossible to control the engine torque, the automatic stop of the engine is discontinued or prohibited. That is, the engine can be brought into the operating state before the vehicle takes off. Therefore, if the vehicle takes off under a condition that it is impossible to perform the engine control, an event, that the predetermined clutch engages after the engine revolution speed has become high, can be avoided. Hence, it becomes possible to prevent an engagement shock of the clutch when the vehicle takes off and therefore prevent a durability deterioration of the clutch.

Advantageous further developments are set out in the dependent claims.

### BRIEF DESCRIPTION OF THE DRAWINGS

The foregoing object as well as further features and advantages of the present invention will become apparent from the following description of a preferred embodiment with reference to the accompanying drawings, wherein like numerals are used to represent like elements and wherein:
Fig. 1 is a flowchart illustrating an example of the control according to the invention;
Fig. 2 is a block diagram illustrating a system construction of a vehicle to which the invention is applied;
Fig. 3 is a schematic illustration of a portion of a hydraulic circuit of a fluid pressure control device shown in Fig. 2;
Fig. 4 is a block diagram illustrating an arrangement of an engine, a drive device and a motor generator that are shown in Fig. 2;
Fig. 5 is a block diagram of a control circuit of the vehicle shown in Fig. 2;
Fig. 6 is a time chart illustrating the state of the system corresponding to an engine automatic stop instruction in the invention;
Fig. 7 is a time chart illustrating the state of the system corresponding to an engine automatic return instruction in the invention; and
Fig. 8 indicates a map for setting a duration of fast apply control in an embodiment of the invention.

### DETAILED DESCRIPTION OF PREFERRED EMBODIMENT

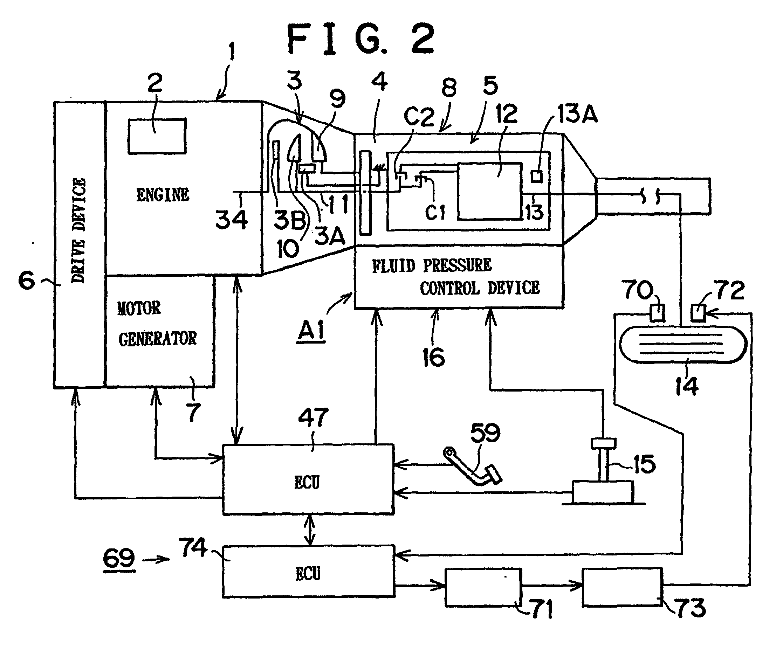

A preferred embodiment of the present invention will be described in detail hereinafter with reference to the accompanying drawings. Fig. 2 is a block diagram illustrating a system construction of a vehicle to which the invention is applied. An engine 1 provided as a power source of the vehicle is an internal combustion engine such as a gasoline engine, a diesel engine, an LPG (liquefied petroleum gas) engine, a gas turbine engine or the like. The engine 1 is equipped with an electronic throttle valve 2 disposed in an intake pipe. The opening of the electronic throttle valve 2 is electrically controlled.

A first transmission path of a torque output from the engine 1 is provided with a torque converter 3, an oil pump 4 and a gear transmission mechanism 5. More specifically, the torque converter 3 is disposed between the engine 1 and the gear transmission mechanism 5. The oil pump 4, provided as a fluid pressure source, is disposed between the torque converter 3 and the gear transmission mechanism 5. A second transmission path of a torque output from the engine 1 is provided with a motor generator 7 that is connected to the engine 1 by a drive device 6.

The construction of the first torque transmission path will be specifically described. The torque converter 3, the oil pump 4 and the gear transmission mechanism 5 are disposed within a casing 8. The casing 8 fluid-tightly contains an automatic transmission fluid (hereinafter, referred to simply as "ATF" or "oil"). The torque converter 3 has a pump impeller 9, a turbine runner 10 and a stator 3A. The stator 3A is provided for amplifying the torque transmitted from the pump impeller 9 to the turbine runner 10. The torque converter 3 is designed so that power is transmitted from the engine 1 to the pump impeller 9 and then a torque is transmitted from the pump impeller 9 to the turbine runner 10 by the ATF. The torque converter 3 further has a lockup clutch 3B for mechanically connecting the pump impeller 9 to the turbine runner 10.

Power from the engine 1 is transmitted to the oil pump 4 via the pump impeller 9, so that the oil pump 4 is driven to generate a source pressure for fluid passages of a fluid pressure control device 16 (described below). The gear transmission mechanism 5 has an input shaft 11, a planetary gear 12, various friction engagement devices including a forward drive clutch C1 and a reverse drive clutch C2, and an output shaft 13. The input shaft 11 is connected to the turbine runner 10, and the output shaft 13 is connected to a road wheel 14. The gear transmission mechanism 5 is designed to allow a plurality of gear speeds (gear ratios), that is, five forward gear speeds and one reverse gear speed. The forward drive clutch C1 is engaged to set a forward gear speed. The reverse drive clutch C2 is engaged to set the reverse gear speed.

In this embodiment, various shift positions, for example, a parking (P) position, a reverse (R) position, a neutral (N) position, a drive (D) position, a 4th position, a 3rd position, a 2nd position and a low (L) position, can be selected by manually operating a shift lever 15. The D position, the 4th position, the 3rd position, the 2nd position, the low position and the R position are travel positions.

If any one of the D position, the 4th position, the 3rd position and the 2nd position is selected, gear shifts between a plurality of gear ratios are allowed. In contrast, if the L position or the R position is selected, the gear ratio is fixed to the selected one. A lock mechanism 13A is provided in the casing 8. If the P position is selected, the lock mechanism 13A prevents rotation of the output shaft 13.

The fluid pressure control device 16 is used to perform various control operations, including a control operation of setting or changing a gear ratio of the gear transmission mechanism 5, a control operation of engaging or releasing the lockup clutch 3B or causing the lockup clutch 3B to slip, a control operation of controlling the line pressure in hydraulic circuits connected in communication to pistons (not shown) that actuate the friction engagement devices, a control operation of controlling the engaging pressure on the friction engagement devices, and the like. The fluid pressure control device 16 is electrically controlled. The fluid pressure control device 16 has first to third shift solenoid valves S1-S3 (not shown) for performing gear shifts in the gear transmission mechanism 5, and a fourth solenoid valve S4 (not shown) for controlling the engine brake state.

The fluid pressure control device 16 further has a linear solenoid valve SLT for controlling the line pressure in the hydraulic circuits, a linear solenoid valve SLN (not shown) for controlling the accumulator back pressure during transitional periods of gear shifts of the gear transmission mechanism 5, and a linear solenoid valve SLU (not shown) for controlling the engaging pressure on the lockup clutch 3B and a predetermined friction engagement device.

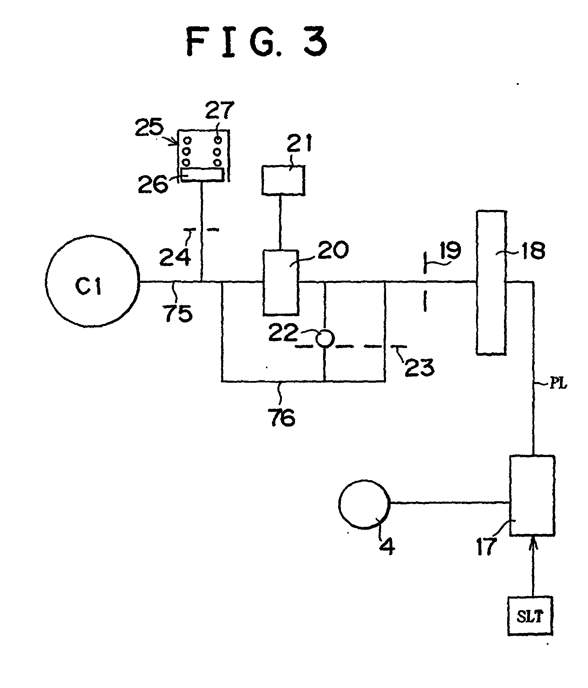

Fig. 3 is a schematic diagram of a portion of a hydraulic circuit corresponding to the forward drive clutch C1. A fluid passage connected to the oil pump 4 is provided with a primary regulator valve 17. The primary regulator valve 17 is provided for regulating the source pressure generated by the oil pump 4 to a line pressure PL. The primary regulator valve 17 is controlled by the linear solenoid valve SLT. The line pressure PL regulated by the primary regulator valve 17 is led to an input port of a manual valve 18. The manual valve 18 is mechanically connected to the shift lever 15. If a forward travel position, for example, the D position, the 4th position, the 3rd position or the 2nd position, is selected, the input port and the output of the manual valve 18 communicate with each other to supply the line pressure PL to the forward drive clutch C1.

A fluid passage 75 between the manual valve 18 and the forward drive clutch C1 is provided with a large orifice 19 and a changeover valve 20 that are disposed in series. The opening and closing of the changeover valve 20 is controlled by a solenoid 21. The changeover valve 20 is provided for selectively supplying the line pressure PL supplied via the large orifice 19 to the forward drive clutch C1 or for stopping the supply of the line pressure PL to the forward drive clutch C1. The solenoid 21 is controlled by an electronic control unit (ECU) 47.

A fluid passage 76 bypasses the changeover valve 20. More specifically, the fluid passage 76 is connected at one end thereof to the fluid passage 75 between the forward drive clutch C1 and the changeover valve 20, and at the other end thereof between the large orifice 19 and the changeover valve 20. The fluid passage 76 is provided with a check ball 22 and a small orifice 23 that are disposed in parallel to each other. The passage area of the small orifice 23 is set smaller than the passage area of the large orifice 19. If the changeover valve 20 is closed, fluid or oil from the large orifice 19 passes through the small orifice 23, and reaches the forward drive clutch C1. The check ball 22 functions to reduce the flow of fluid supplied to the forward drive clutch C1 via the fluid passage 76 when the forward drive clutch C1 is engaged. When the forward drive clutch C1 is released, the check ball 22 functions to promote discharge of fluid from the forward drive clutch C1 by increasing the fluid passage area.

An accumulator 25 is connected, via an orifice 24, to a portion of the fluid passage 75 that extends between the changeover valve 20 and the forward drive clutch C1. The accumulator 25 has a piston 26 and a spring 27. The accumulator 25 and the orifice 24 are provided for, when the shift lever 15 is moved from the N position to the D position so as to engage the forward drive clutch C1, controlling the fluid pressure to be supplied to the forward drive clutch C1 in such a manner that a predetermined fluid pressure characteristic determined by the spring 27 and the accumulator back pressure (more specifically, a slow pressure increase characteristic) is established for a predetermined length of time.

Therefore, when the shift lever 15 is moved from the N position to the D position to engage the forward drive clutch C1, a shock that occurs during engagement of the forward drive clutch C1 can be reduced. The hydraulic circuit corresponding to the reverse drive clutch C2 may also be constructed similar to the hydraulic circuit shown in Fig. 3.

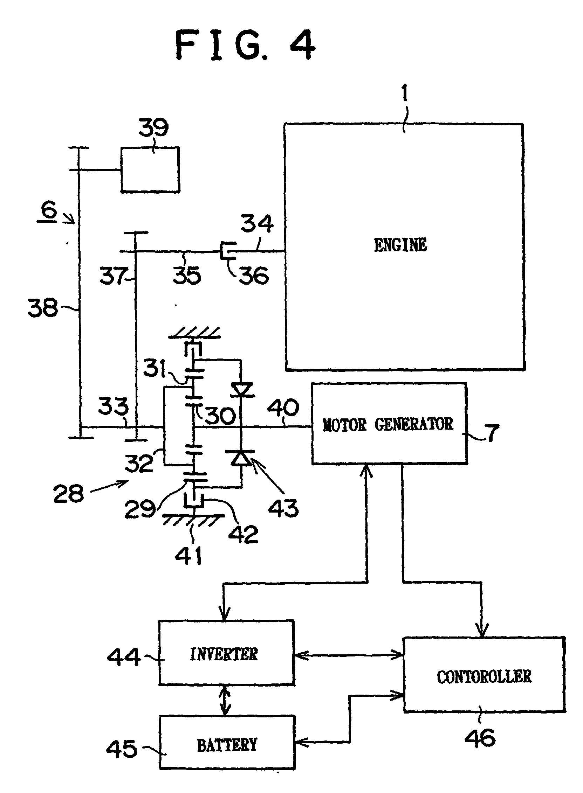

Fig. 4 is an illustration of the construction of the second torque transmission path extending from the engine 1. The drive device 6 has a speed reducing device 28 that is connected to the engine 1 and the motor generator 7. The motor generator 7 may be, for example, an AC synchronous type. The motor generator 7 has a rotor (not shown) having permanent magnets (not shown), and a stator (not shown) having coils (not shown). When the three-phase coil windings are supplied with three-phase currents, rotating magnetic fields are generated. By controlling the rotating fields in accordance with the rotational position and speed of the rotor, torque is generated. The torque generated by the motor generator 7 is substantially proportional to the magnitude of current. The operating speed of the motor generator 7 is controlled by the AC current frequency.

The speed reducing device 28 has a ring gear 29 and a sun gear 30 that are concentrically disposed, and a plurality of pinion gears 31 meshing with the ring gear 29 and the sun gear 30. The pinion gears 31 are supported by a carrier 32 that is connected to a rotating shaft 33. Another rotating shaft 35 is provided concentrically or coaxially with a -crankshaft 34 of the engine 1. A clutch 36 is provided for connecting and disconnecting the rotating shaft 35 and the crankshaft 34. A chain 37 is provided for transmitting torque between the rotating shaft 35 and the rotating shaft 33. The rotating shaft 33 is also connected to an auxiliary device 39, such as a compressor or the like, via another chain 38.

The motor generator 7 has an output shaft 40 that is connected to the sun gear 30. A housing 41 of the drive device 6 is provided with a brake 42 that stops the ring gear 29 from rotating. A one-way clutch 43 is disposed around the output shaft 40. An inner wheel of the one-way clutch 43 is connected to the output shaft 40, and an outer wheel thereof is connected to the ring gear 29. Constructed as described above, the speed reducing device 28 performs torque transmission or speed reduction between the engine 1 and the motor generator 7. The one-way clutch 43 is designed to engage if torque outputted from the engine 1 is transmitted to the motor generator 7.

The motor generator 7 have the function as a starter for starting the engine 1, the function as a generator (alternator) for generating electric power from power of the engine 1, and the function of driving the auxiliary device 39 when the engine 1 is stopped.

When the motor generator 7 is caused to perform the starter function, the clutch 36 and the brake 42 are engaged and the one-way clutch 43 is released. When the motor generator 7 is caused to perform the alternator function, the clutch 36 and the one-way clutch 43 are engaged and the brake 42 is released. When the motor generator 7 is used to drive the auxiliary device 39, the brake 42 is engaged and the clutch 36 and the one-way clutch 43 are released.

A battery 45 is connected to the motor generator 7 via an inverter 44. The motor generator 7, the inverter 44 and the battery 45 are connected to a controller 46. Therefore, it is possible to generate electric power by inputting power from the engine 1 to the motor generator 7 and store the electric energy into the battery 45 via the inverter 44.

It is also possible to transmit power from the motor generator 7 to the engine 1 or to the auxiliary device 39. Furthermore, when the motor generator 7 is caused to function as an electric motor, a DC voltage from the battery 45 is converted to an AC voltage, and the AC voltage is supplied to the motor generator 7. When the motor generator 7 is caused to perform the generator function, an induction voltage generated by rotation of the rotor is converted to a DC voltage by the inverter 44, and the DC voltage is stored into the battery 45.

The controller 46 has the function of detecting or controlling the value of current supplied from the battery 45 to the motor generator 7 or the value of current generated by the motor generator 7. The controller 46 further has the function of controlling the rotational speed of the motor generator 7 and the function of detecting and controlling the state of charge (SOC) of the battery 45.

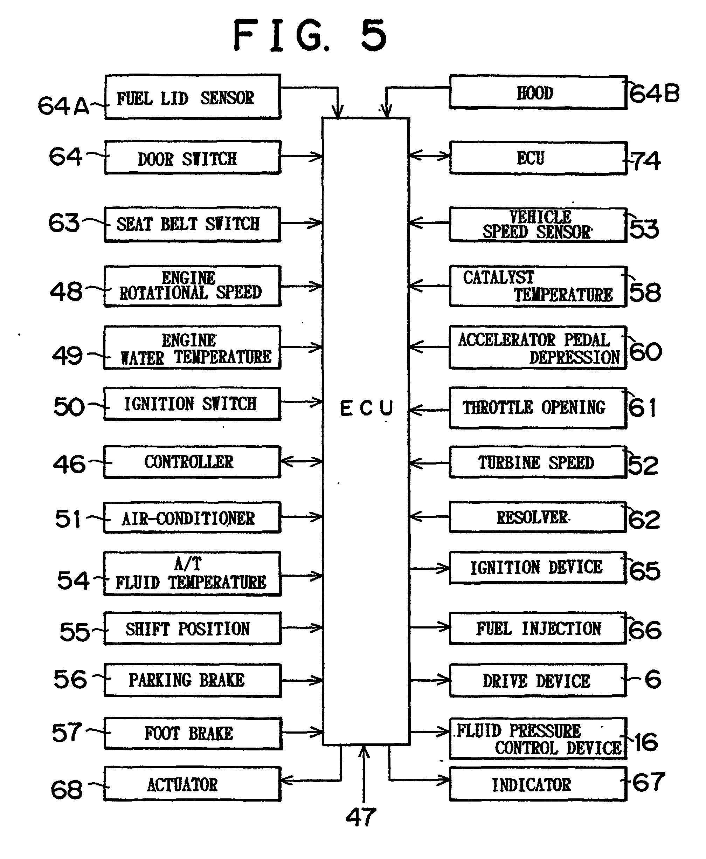

Fig. 5 is a block diagram illustrating a control circuit of a vehicle to which the invention is applied. The electronic control unit (ECU) 47 is formed by a microcomputer made up mainly of a central processing unit (CPU), storage devices (RAM, ROM), and input/output interfaces.

The ECU 47 receives inputs of a signal from an engine rotational speed sensor 48, a signal from an ignition switch 50, a signal from the controller 46, a signal from an air-conditioner switch 51, a signal from an input shaft rotational speed sensor 52 for detecting the rotational speed of the input shaft 11, a signal from an output shaft rotational speed sensor (vehicle speed sensor) 53 for detecting the rotational speed of the output shaft 13, a signal from a fluid temperature sensor 54 for detecting the temperature of the ATF, a signal from a shift position sensor 55 for detecting the selected position of the shift lever 15, and the like.

The ECU 47 also receives inputs of a signal from a parking brake switch 56 for detecting a driver's intention to stop the vehicle, a signal from a foot brake switch 57 for detecting a driver's intention to reduce the vehicle speed or brake the vehicle, a signal from a catalyst temperature sensor 58 provided partway of an exhaust pipe (not shown), a signal from an accelerator pedal depression sensor 60 that indicates the degree of depression of an accelerator pedal 59, a signal from a throttle opening sensor 61 for detecting the opening of the electronic throttle valve 2 of the engine 1, and the like.

The ECU 47 further receives inputs of a signal from a resolver 62 for detecting the rotational speed and angle of the motor generator 7, a signal from a seat belt switch 63 for detecting whether the driver's seat-side seat belt has been set, a signal from a door switch 64 for detecting the open or closed state of the driver's seat-side door, a signal from a fuel lid sensor 64A for detecting the open or closed state of the fuel lid, a signal from a hood sensor 64B for detecting the open or closed state of the hood, and the like.

The ECU 47 outputs a signal for controlling an ignition device 65 of the engine 1, a signal for controlling a fuel injection device 66 of the engine 1, a signal for controlling the controller 46, a signal for controlling the clutch 36 and the brake 42 of the drive device 6, a signal for controlling the fluid pressure control device 16, a control signal to an indicator 67 that outputs information regarding an automatically stopped state and an automatically return state of the engine 1 by using a lamp, a buzzer or the like, a control signal to an actuator 68 that controls the opening of the electronic throttle valve 2 on the basis of a map corresponding to the accelerator pedal depression or other conditions, and the like. The engine torque is controlled through the control of the ignition timing of the ignition device 65 or the control of the opening of the electronic throttle valve 2.

As shown in Fig. 2, the vehicle according to the embodiment is equipped with an antilock brake system (hereinafter, referred to as "ABS") 69. The ABS 69 is a mechanism for controlling the braking hydraulic pressure that acts on the wheel cylinder of each wheel 14 at the time of braking the vehicle so as to secure an appropriate cornering force and an appropriate steering characteristic and, furthermore, achieve a slip rate that provides a maximum friction coefficient so that the braking distance is minimized.

The ABS 69 has wheel rotational speed sensors 70 for detecting the rotational speed of the individual wheels 14, an ABS actuator 73 that is disposed partway of a piping between a master cylinder 71 and a wheel cylinder 72 of each wheel and that controls the brake fluid pressure on each wheel cylinder 72, an electronic control unit 74 that, based on signals from the wheel rotational speed sensors 70, estimates a vehicle speed, monitors the rotation of each wheel 14, and outputs brake pressure increase or decrease instructions to the ABS actuators 73 so that optimal braking forces in accordance with the road condition can be obtained. The ECU 74 and the ECU 47 are interconnected so that data communication can be performed therebetween.

The content of the control of the vehicle will be briefly described. When the ignition switch 50 is set to a start position by operating an ignition key (not shown), torque is transmitted from the motor generator 7 to the engine 1 via the drive device 6 so that the engine 1 is started. When the operating force on the ignition key is released, the ignition switch 50 automatically returns to an on-position. During travel of the vehicle, the automatic transmission A1 having the gear transmission mechanism 5 and the fluid pressure control device 16 is controlled and the gear ratio of the automatic transmission A1 is controlled on the basis of a shift graph (shift map) stored in the ECU 47. Furthermore, the lockup clutch 3B is controlled on the basis of a lockup clutch control map stored in the ECU 47.

The battery 45 is controlled so that the amount of charge thereof is maintained within a predetermined range. If the amount of charge of the battery 45 becomes low, a control is performed such that the engine output is increased and a portion of the engine output is transmitted to the motor generator 7, so that the electric energy generated by the motor generator 7 is stored into the battery 45. Based on the various signals inputted to the ECU 47, an automatic stop control of automatically changing the state of the engine from an operating state to a stopped state, and an automatic return control of automatically returning the state of the engine from the automatically stopped state to the operating state are performed.

The automatic stop control and the automatic return control are performed on the basis of the signal from the vehicle speed sensor 53, the signal from the foot brake switch 57, the signal from the shift position sensor 55, the signal from the accelerator pedal depression sensor 60, the signal indicating the amount of charge of the battery 45, and the like.

The automatic stop control and the automatic return control of the engine 1 are performed when the shift lever 15 has been set to the N position or the D position. More specifically, the stop conditions for automatically stopping the engine 1 are established in a case where the vehicle speed is zero, and where the foot brake switch 57 is on, and where the accelerator pedal 59 is off, and where the amount of charge of the battery 45 is greater than a predetermined value.

If at least one of the aforementioned conditions becomes unsatisfied during the automatically stopped state, the return condition is established. Furthermore, in this embodiment, if the ECU 47 determines that it is impossible to control the engine torque, the control of selecting the operating state of the engine 1 is performed.

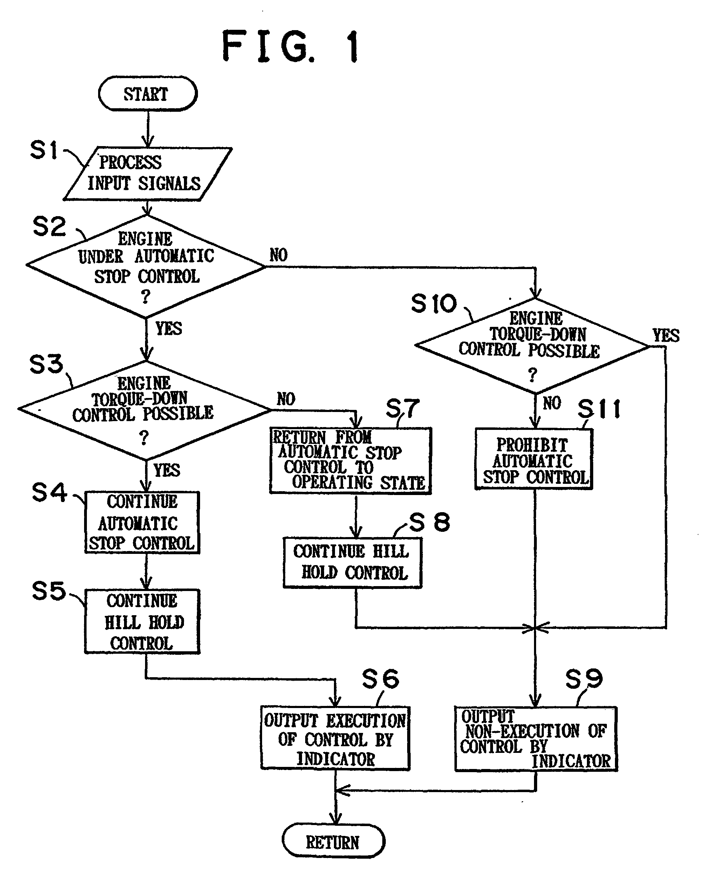

The content of the control of the vehicle constructed as described above will be described with reference to the flowchart shown in Fig. 1. In step 1, the detection signals from the various switches and sensors are inputted to the ECU 47, and the input signals are processed by the ECU 47. Subsequently in step 2, it is determined whether the engine 1 is under the automatic stop control (whether the engine 1 has been stopped).

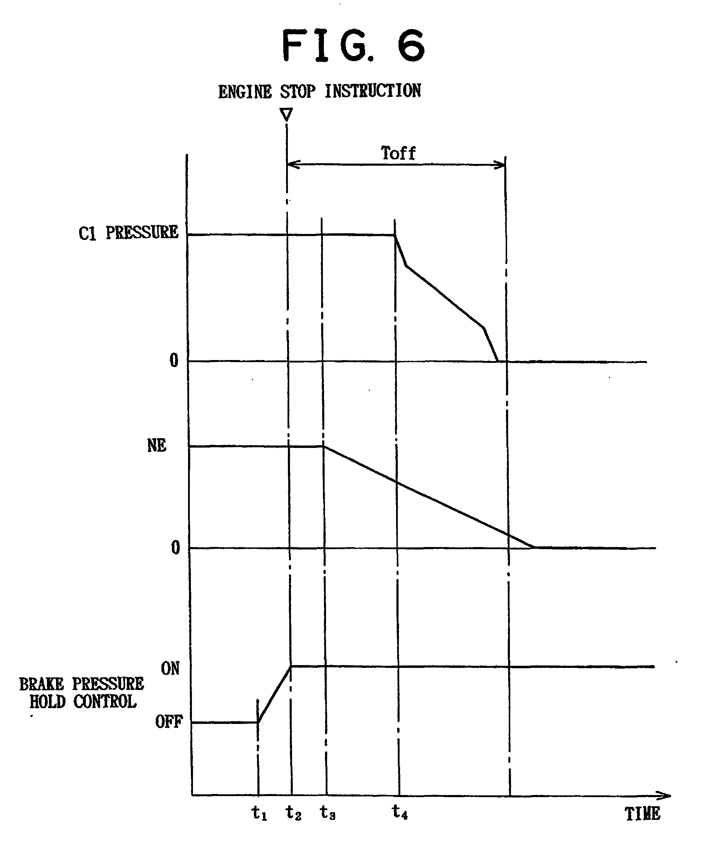

The state of the system that occurs in conjunction with the affirmative determination of the automatic stop of the engine 1 will be described with reference to the time chart shown in Fig. 6. If the determination of the automatic stop is established, a control signal is outputted to the ABS 69 at a time point t1. More specifically, the brake fluid pressure acting on each wheel cylinder 72 is maintained as it has been and, after a time point t2, the brake fluid pressure is kept at a constant value. This control sequence performed by the ABS 69 is generally termed hill hold control. An instruction to stop the engine 1 is outputted at the time point t2. After a slight delay, that is, at a time point t3, the engine revolution speed NE gradually decreases.

Along with the decrease in the engine revolution speed NE, the revolution speed of the oil pump 4 also decreases, exhibiting a characteristic that the fluid pressure on the forward drive clutch C1 starts to sharply decrease at a time point t4 that is later than the time point t3. As a result, torque transmission to each wheel 14 discontinues. Therefore, if the road has at least a predetermined slope, there is a possibility that the wheels 14 will rotate due to the weight of the vehicle. However, the hill hold control prevents rotation of the wheels 14.

If the determination in step 2 is affirmative, it is determined in step 3 whether it is possible to perform the control of reducing the engine torque. Examples of the criterion for the determination in step 3 are whether it is possible to perform the ignition timing delay control by the ignition device 65, whether it is possible to perform the opening control of the electronic throttle valve 2, and the like.

If the determination in step 3 is affirmative, the automatic stop control is continued in step 4, and the hill hold control is continued in step 5. Subsequently in step 6, the information that the automatic stop control of the engine 1 is being performed is outputted by the indicator 67 for recognition by the driver. The operation is then returned.

If during the automatic stop control of the engine 1, the return condition is established due to, for example, depression of the accelerator pedal 59, the engine revolution speed NE will become high before the forward drive clutch C1 engages provided that the engagement thereof is not prompt. In such a case, there is a possibility of an engagement shock and a deterioration of the durability of the forward drive clutch C1.

In a case where the shift lever 15 is set at the N position during operation of the engine 1, the line pressure PL acts up to the input port of the manual valve 18. In contrast, in a case where the automatic stop control of the engine 1 is performed with the shift lever 15 set to the D position, the oil pump 4 is stopped. Therefore, it takes a relatively long time for the fluid pressure to reach the piston that actuate the forward drive clutch C1 for the automatic return of the engine 1 to the operating state, in comparison with the case of a manual gear shift transmission.

However, if the determination in step 3 is affirmative, the torque-down control of the engine 1 can be accomplished through the opening control of the electronic throttle valve 2, or the ignition timing delay control, or the like before the engine 1 automatically returns from the automatically stopped state to the operating state. In this manner, the embodiment controls or curbs the engagement shock of the forward drive clutch C1 and the durability deterioration of the forward drive clutch C1. In order to quickly increase the fluid pressure on the piston for actuating the forward drive clutch C1 to a predetermined value, fast apply control or pressure increase control as described below may be performed, thereby further improving the vehicle takeoff characteristic.

The fast apply control will be mainly described, and the pressure increase control will be described later. As mentioned above, when the instruction to automatically return the engine 1 to the operating state is outputted, the engine 1 is restarted and the oil pump 4 is started to operate. The line pressure PL regulated by the primary regulator valve 17 is supplied to the piston for actuating the forward drive clutch C1, via the manual valve 18. If the fast apply control signal has been outputted and the changeover valve 20 has been opened, the line pressure PL via the manual valve 18 passes through the large orifice 19, and the pressure is then supplied directly to the piston of the forward drive clutch C1.

Subsequently, the changeover valve 20 is closed in response to a control signal from the ECU 47 immediately before the start of engagement of the forward drive clutch C1, so that the line pressure PL through the large orifice 19 slowly acts on the forward drive clutch C1 via the small orifice 23. At this stage, the fluid pressure supplied to the forward drive clutch C1 increases, and the piston 26 is moved upward in Fig. 3 against the force of the spring 27 by the fluid pressure from the fluid passage 75 connected to the forward drive clutch C1. As a result, the fluid pressure acting on the forward drive clutch C1 is controlled to a slowly increasing characteristic during the movement of the piston 26, so that the engagement of the forward drive clutch C1 can be smoothly accomplished.

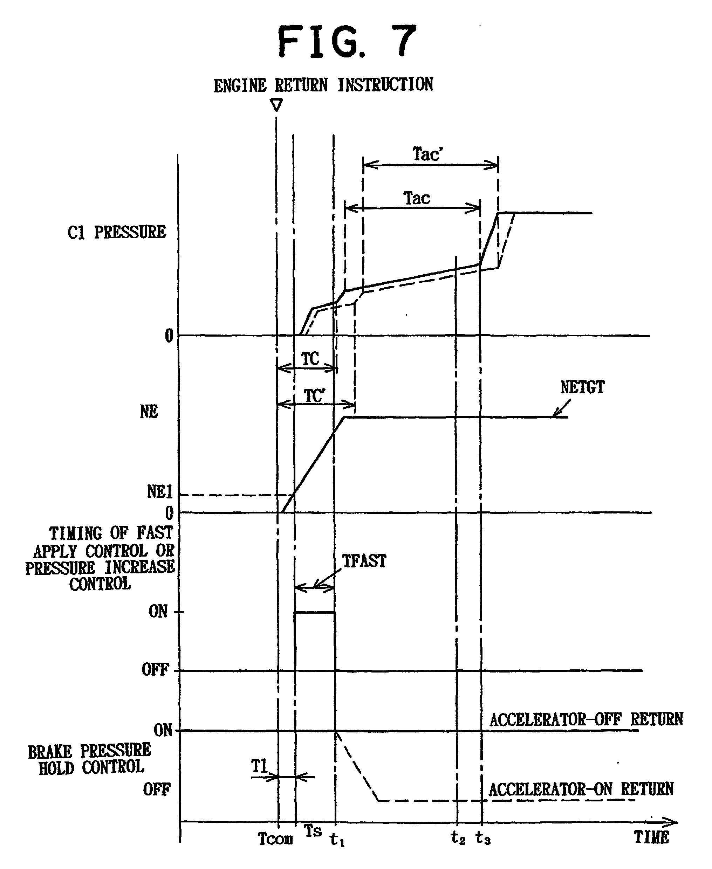

Fig. 7 is a time chart indicating the state of the system in conjunction with the return control of the engine 1. In the chart, a fluid pressure characteristic of the forward drive clutch C1 exhibited when the fast apply control is performed is indicated by a solid line, and a fluid pressure characteristic exhibited when the fast apply control is not performed is indicated by a broken line. When the fast apply control is not performed, the engaging fluid pressure for the forward drive clutch C1 is always supplied via the small orifice 23.

In the chart, a time TFAST indicates the duration of execution of the fast apply control. The time TFAST qualitatively corresponds to a duration that is needed for the piston (not shown) of the forward drive clutch C1 to pack the generally-termed clutch pack, and also corresponds to a duration that elapses up to a time point that is slightly before the engine revolution speed NE reaches a predetermined idle revolution speed. In the chart, a time Tc and a time Tc' correspond to a duration for packing the clutch pack of the forward drive clutch C1, and a time Tac and a time Tac' correspond to a duration during which the accumulator 25 is operating.

If the fast apply control is not performed, the fluid pressure from the manual valve 18 is supplied to the forward drive clutch C1 via the small orifice 23. Therefore, the relatively long time Tc' elapses before the clutch pack of the piston of the forward drive clutch C1 is packed, and the engagement of the forward drive clutch C1 is completed at about a time point t3 after the characteristic indicated by the broken line. In the embodiment, however, since the fast apply control is performed during the time TFAST after the instruction to return the engine 1 to the operating state has been outputted, the clutch pack can be packed within the time Tc, which is shorter than the time Tc'. Therefore, the embodiment can complete the engagement of the forward drive clutch C1 at about a time point t2 that is earlier than the time point t3.

The fast apply control start timing Ts is preset to a time point at which the engine revolution speed (i.e., the operating speed of the oil pump 4) NE becomes greater than a predetermined value NE1. The reason for such a shift of the fast apply control start timing from the output timing of the engine restart instruction Tcom is that the duration T1 between the zero revolution speed of the engine 1 and a slight revolution speed rise is likely to vary depending on the condition of the stop of the engine 1.

More specifically, if the fast apply control is started simultaneously with the engine restart instruction Tcom, there is a possibility that, due to a variation of the aforementioned duration T1, the forward drive clutch C1 may start engaging during execution of the fast apply control and therefore a shock is caused. Considering this possibility, the fast apply control start timing is set to a time point Ts at which the engine revolution speed NE has started to slightly rise, instead of a time point during a time period immediately after the restart of the engine 1, during which period the duration T1 is likely to vary. In this manner, it becomes possible to supply the forward drive clutch C1 with the engaging fluid pressure while minimizing the effect of the variation of the duration T1 regardless of the condition of the stop of the engine 1.

The fast apply control start timing may also be set taking other conditions into consideration. For example, if the instruction to return the engine 1 to the operating state is outputted immediately after the automatic engine stop instruction is outputted, the fast apply control starts before the fluid pressure acting on the forward drive clutch C1 is sufficiently removed. In such a case, there is a possibility that the fluid pressure on the forward drive clutch C1 will sharply increase and an engagement shock will occur.

In order to avoid the aforementioned event, it is possible to preset an estimated time Toff between the output of the engine stop instruction and the zero fluid pressure on the forward drive clutch C1 by using a timer and to prevent the fast apply control until the elapse of the time Toff, as indicated in Fig. 6. Furthermore, instead of estimating the time Toff, a decrease in the fluid pressure on the forward drive clutch C1 may be estimated, based on that the engine revolution speed NE has decreased to a predetermined value. Based on the result of estimation, the fast apply control may be set.

The duration TFAST of the fast apply control will next be described. The ATF, which is the operating fluid of the automatic transmission A1, has a characteristic that its viscosity changes depending on temperature. When temperature is low (for example, 20°C or lower), the viscosity of the fluid is high, so that the amount of fluid supplied to the forward drive clutch C1 is less than the amount supplied thereto at a normal temperature (for example, 20°C-80°C) provided that the duration of the fast apply control remains unchanged. Therefore, it is necessary to continue the fast apply control for a longer time at low temperatures than at a normal temperature.

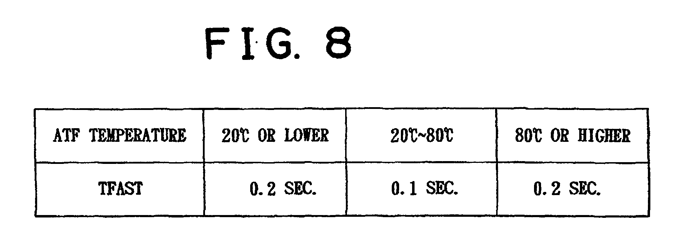

On the other hand, when temperature is high (for example, 80°C or higher), the fluid viscosity becomes considerably lower than the viscosity at the normal temperature, so that the amount of fluid leakage from various sealing portions of valve bodies of the fluid pressure control device 16 increases. Therefore, the amount of fluid supplied to the forward drive clutch C1 at high temperatures tends to be less than the amount supplied at the normal temperature provided that the duration of the fast apply control is fixed. To cope with this problem, the duration TFAST may be set on the basis of a map in which the ATF temperature corresponds to the duration TFAST as indicated in Fig. 8. The map is pre-stored in the ECU 47. By setting the duration TFAST in this manner, the effect of viscosity variation on the fast apply control can be reduced if any viscosity variation occurs due to changes in the ATF temperature. Thus, an engagement shock of the forward drive clutch C1 can be avoided.

The aforementioned pressure increase control will be described. In the pressure increase control, the pressure regulation value of the primary regulator valve 17 is increased by the function of the linear solenoid valve SLT to increase the line pressure PL. The start timing and the duration of the pressure increase control may be the same as or different from those adopted in the fast apply control. At least one of the fast apply control and the pressure increase control may be employed for the automatic return of the engine 1 to the operating state.

The state of the ABS 69 when the return control of the engine 1 is performed will be described. If it is determined in step 3 in Fig. 1 that the engine torque-down control is not possible, the engine 1 is to be returned to the operating state without a driver' s intention to return the engine 1 from the stopped state to the operating state, that is, while the . accelerator pedal remains undepressed. In this case, the operation proceeds to step 7 to return the engine 1 from the stopped state to the operating state, and then proceeds to step 8, in which the hill hold control is continued as indicated by a solid line in Fig. 7.

If there is a driver's intention to return the engine 1 from the stopped state to the operating state, that is, if the engine 1 is to be returned from the automatically stopped state to the operating state upon depression of the accelerator pedal, control of reducing the brake fluid pressure supplied to each wheel cylinder 72 is started at a time point t1 that is the end of the duration TFAST, so that the hill hold control is discontinued before a time point t2 by a broken line in Fig.7. That is, the braking force caused by the ABS 69 is discontinued, and the torque converter 3 produces a creep force.

The operation performed in conjunction with the negative determination in step 3 will be described. The determination in step 3 becomes negative in, for example, a case where a failure in the electronic throttle valve 2 or the actuator 68 is detected, or a case where the ignition timing delay control is restricted due to a condition such as the catalyst temperature (or exhaust gas temperature) or the like. If, in such a case, the return condition is established due to, for example, depression of the accelerator pedal 59, the torque-down control of the engine 1 cannot be performed at the time of takeoff of the vehicle, so that the problems of an engagement shock of the forward drive clutch C1, a durability reduction of the forward drive clutch C1, and the like occur. Therefore, in the embodiment, if the determination in step 3 is negative, the control of automatically returning the engine 1 to the operating state before the engine state return condition is actually established is performed (step 7).

Since the vehicle drive request is not established at this state, the hill hold control is continued in step 8 in order to prevent torque transmission to the wheels 14 and therefore prevent rotation of the wheels 14. If the return condition and the takeoff request are established due to depression of the accelerator pedal 59, the hill hold control is discontinued. After step 8, the operation proceeds to step 9, in which the indicator 67 is caused to indicate that the automatic stop control of the engine 1 is not performed. The operation is then returned.

In this manner, the engine 1 is returned to the operating state by the control operation in step 7 even if the determination in step 3 is negative. Therefore, the oil pump 4 becomes operated, so that if the engine state return condition is established after step 7, the engagement of the forward drive clutch C1, after the revolution speed NE of the engine 1 has become high, can be avoided. Thus, the engagement shock of the forward drive clutch C1 and the durability reduction of the forward drive clutch C1 can be prevented.

The negative determination in step 2 means that the engine 1 is in the operating state. Therefore, subsequently to the negative determination in step 2, it is determined in step 10 whether it is possible to perform the torque-down control of the engine 1 before the engine stop condition is established. The content of step 10 is the same as that of step 3. If the determination in step 10 is affirmative, the operation proceeds to step 9. If the automatic stop control and the return control of the engine 1 are performed after the affirmative determination in step 10, the same effect as achieved after the affirmative determination in step 3 can be achieved for the same reasons.

If the determination in step 10 is negative, it is considered that the automatic stop control and the automatic return control of the engine 1 have been performed. In step 11, the automatic stop control of the engine 1 is prohibited in order to maintain the operating state of the engine 1 for substantially the same reason stated above in conjunction with the negative determination in step 3. The operation then proceeds to step 9. If the return condition is later established due to depression of the accelerator pedal 59 and therefore the vehicle takes off, the oil pump 4 has already been in operation, so that the forward drive clutch C1 is promptly supplied with fluid pressure. Therefore, the forward drive clutch C1 engages before the revolution speed NE of the engine 1 becomes high. In this manner, the engagement of the forward drive clutch C1, after the revolution speed NE of the engine 1 has become high, is avoided. Thus, the engagement shock and the durability reduction of the forward drive clutch C1 can be curbed.

The correspondence between the functions described above with reference to the flowchart of Fig. 1 and the constructions according to the invention will be mentioned. Steps 3 and 10 correspond to torque control determining means in the invention. Steps 7 and 11 correspond to engine control means in the invention. Step 7 may also be considered as return control means since the engine 1 is returned from the automatically stopped state to the operating state in step 7.

As is understood from the above description, the embodiment is able to control the state of the engine 1 to the operating state prior to a takeoff of the vehicle if the torque-down control of the engine 1 cannot be performed. Therefore, even if the vehicle takes off under a condition that it is impossible to perform the torque-down control of the engine 1, the engine 1 has been brought into the operating state and the oil pump 4 has been operated when the vehicle takes off, so that the forward drive clutch C1 is quickly supplied with fluid pressure. In this manner, an undesired event that the forward drive clutch C1 engages after the revolution speed NE of the engine 1 has become high is avoided. Hence, it becomes possible to prevent an engagement shock of the forward drive clutch C1 when the vehicle takes off and to therefore prevent the durability reduction of the forward drive clutch C1.

Although the foregoing embodiment employs a measure for preventing rotation of the wheels 14 through the control of the ABS 69 when performing the automatic stop control of the engine 1, other measures may also be employed to prevent rotation of the wheels 14. For example, it also is possible to mechanically prevent rotation of the output shaft 13 through electrical control of the-lock mechanism 13A of the automatic transmission A1 if the determination as to whether to start the automatic stop control is affirmative. Furthermore, the foregoing embodiment may also perform control of fluid pressure on the friction engagement devices that are engaged to set the reverse speed in order to improve the takeoff characteristic of the vehicle.

This invention is also applicable to a type of vehicle that has an automatic clutch in a torque transmission path extending between the engine and a manual transmission that allows a gear ratio change through operation of a shift device. In the case of this type of vehicle, the automatic clutch engaging fluid pressure is reduced and released if the operating speed of the oil pump is reduced by the automatic stop control of the engine. When the automatic return control of the engine of the vehicle is started, the oil pump starts to operate again, so that the engaging fluid pressure on the automatic clutch increases.

While the present invention has been described with reference to what is presently considered to be a preferred embodiment thereof, it is to be understood that the invention is not limited to the disclosed embodiment or constructions. To the contrary, the invention is intended to cover various modifications and equivalent arrangements included within the scope of the invention defined in the appended claims.

## Claims

1. A vehicular engine control apparatus for a vehicle wherein an engine (1) is automatically stopped upon establishment of a predetermined stop condition, and the engine (1) is restarted from an automatically stopped state upon establishment of a predetermined restart condition, and wherein at the time of restart of the engine (1), a torque of the engine (1) is transmitted by engaging a clutch (C1, C2) provided in a torque transmission path, comprising:
an engine torque control means (65, 68) for controlling the torque of the engine (1);
a torque control determining means (S3, S10) for determining whether it is possible to control the torque of the engine (1) by using the engine torque control means (65; 68); and
an engine control means (S7, S11) for discontinuing or prohibiting an automatic stop of the engine (1) if it is determined by the torque control determining means (S3, S10) that it is impossible to control the torque of the engine (1).

2. A vehicular engine control apparatus according to claim 1, **characterized by** a braking device (69) that generates a braking force for the vehicle (1); and
a braking force control means (S2, S5) that brakes the vehicle by using the braking device (69) at the time of the automatic stop of the engine (1).

3. A vehicular engine control apparatus according to claim 2, **characterized by** a takeoff request determining means (60) for, if the predetermined restart condition is established during the automatically stopped state of the engine (1), determining whether there is a vehicle takeoff request,
wherein if the engine restart condition is established, the braking force control means (S2, S5) controls the braking device (69) on the basis of a determination made by the takeoff request determining means (60) as to whether there is the vehicle takeoff request.

4. A vehicular engine control apparatus according to claim 3, **characterized in that** the takeoff request determining means (60) determines whether there is the vehicle takeoff request on the basis of whether there is a depression of an accelerator pedal (59).

5. A vehicular engine control apparatus according to any one of claims 1 through 4, **characterized in that** the engine torque control means comprises:
an ignition device (65) that ignites an air-fuel mixture in a cylinder of the engine; and
an ignition timing control means for controlling an ignition timing of the ignition device (65),
wherein a torque-down control of the engine (1) is performed by the ignition timing control means delaying the ignition timing of the ignition device (65) from an optimal ignition timing.

6. A vehicular engine control apparatus according to claim 5, **characterized by** a catalyst temperature detector (58) that detects a temperature of a catalyst,
wherein if the temperature of the catalyst detected by the catalyst temperature detector (58) is lower than a predetermined value, the torque control determining means determines that the torque-down control through an ignition timing delay control is impossible.

7. A vehicular engine control apparatus according to any one of claims 1 through 6, **characterized in that** the engine torque control means comprises:
a throttle valve (2) that controls an intake air flow into the engine; and
a throttle valve opening control means (68) for controlling an opening of the throttle valve (2),
wherein a torque-down control of the engine (1) is performed by the throttle valve opening control means (68) controlling the opening of the throttle valve to an opening that is smaller than a normal opening corresponding to an amount of depression of an accelerator pedal.

8. A vehicular engine control apparatus according to any of claims 1 through 7,**characterized by** a fail detection means for detecting a failure of the engine torque control means;
wherein the engine torque determining means determines that it is impossible to control the torque of the engine when the failure of the fail detection means is detected by the fail detection means.

9. A vehicular engine control apparatus according to any of the preceding claims, **characterized in that** the engine torque control means (65, 68) automatically controls the torque of the engine (1) in order to reduce an engagement shock caused when engaging the clutch (C1, C2) provided in the torque transmission path.

10. A vehicular engine control apparatus according to claim 9, **characterized in that** the clutch (C1, C2) is engaged by applying a pressure which is produced by a fluid pressure source (4) performed by the power of the engine (1) and which is controlled by a fluid pressure control device (16).

11. A vehicular engine control apparatus according to any of claims 3 to 9, **characterized in that** the engine control means (S7) discontinues an automatic stop of the engine (1) while the brake force control means (S5) continues braking the vehicle when it has been determined by the torque control determining means (S3) that it is impossible to control the torque of the engine, and no takeoff request has been determined by the takeoff request determining means (60), during an automatic stop control of the engine(1).

## Patentansprüche

1. Ein Fahrzeugmotor-Steuerapparat für ein Fahrzeug, worin ein Motor (1) bei Feststellung einer bestimmten Stoppbedingung automatisch gestoppt wird, und der Motor (1) bei Feststellung einer bestimmten Neustartbedingung von einem automatisch gestoppten Zustand neu gestartet wird, und worin zur Zeit des Neustarten des Motors (1) ein Drehmoment des Motors (1) durch Eingriff einer in einem Drehmoment-Übertragungszweig bzw. Drehmoment-Getriebezweig vorgesehenen Kupplung (C1, C2) übertragen wird, folgendes aufweisend:
eine Motordrehmoment-Steuereinrichtung (65, 68) zum Steuern des Drehmoments des Motors (1);
eine Drehmomentsteuerungs-Ermittlungseinrichtung (S3, S10) zum Ermitteln, ob es möglich ist, das Drehmoment des Motors (1) unter der Verwendung der Motordrehmoment-Steuereinrichtung (65; 68) zu steuern; und
eine Motorsteuereinrichtung (S7, S11) zum Unterbrechen oder zum Verhindern eines automatischen Stopps des Motors (1), wenn durch die Drehmomentsteuerungs-Ermittlungseinrichtung (S3, S10) ermittelt wird, dass es nicht möglich ist, das Drehmoment des Motors (1) zu steuern.

2. Fahrzeugmotor-Steuerapparat gemäß Anspruch 1, **gekennzeichnet durch**
eine Bremseinrichtung (69), welche eine Bremskraft für das Fahrzeug (1) erzeugt; und
eine Bremskraftsteuereinrichtung (S2, S5), welche das Fahrzeug unter Verwendung der Bremseinrichtung (69) zu dem Zeitpunkt des automatischen Stopps des Motors (1) bremst.

3. Fahrzeugmotor-Steuerapparat gemäß Anspruch 2, **gekennzeichnet durch**
eine Anlaufanforderungs-Ermittlungseinrichtung (60) zum Ermitteln, ob eine Fahrzeuganlaufanforderung vorliegt, wenn die bestimmte Neustartbedingung während des automatisch gestoppten Zustandes des Motors (1) festgelegt ist, worin, wenn die Motorneustartbedingung festgelegt ist, die Bremskraftsteuereinrichtung (S2, S5) die Bremseinrichtung (69) auf der Basis einer Ermittlung steuert, die mittels der Anlaufanforderungs-Ermittlungseinrichtung (60) gemacht wird, ob eine Fahrzeuganlaufanforderung vorliegt.

4. Fahrzeugmotor-Steuerapparat gemäß Anspruch 3, **dadurch gekennzeichnet, dass**
die Anlaufanforderungs-Ermittlungseinrichtung (60) auf der Basis, ob ein Gaspedal (59) gedrückt ist, ermittelt, ob eine Fahrzeuganlaufanforderung vorliegt.

5. Fahrzeugmotor-Steuerapparat gemäß einem der Ansprüche 1 bis 4, **dadurch gekennzeichnet, dass**
die Motordrehmoment-Steuereinrichtung folgendes aufweist:
Eine Zündeinrichtung (65), die eine Luft-Treibstoffmischung in einem Zylinder des Motors zündet; und
eine Zündungszeitsteuereinrichtung zum Steuern einer Zündungszeit der Zündeinrichtung (65), worin eine Drehmoment-Heruntersteuerung des Motors (1) mittels der Zündungszeitsteuereinrichtung durch Verzögerung der Zündungszeit der Zündeinrichtung (65) von einem optimalen Zündungszeitpunkt durchgeführt wird.

6. Fahrzeugmotor-Steuerapparat gemäß Anspruch 5, **gekennzeichnet durch**
einen Katalysator-Temperatur-Detektor (58), welcher eine Temperatur eines Katalysators detektiert, worin, wenn die mittels des Katalysator-Temperatur-Detektors (58) detektierte Temperatur des Katalysators geringer als ein bestimmter Wert ist, die Drehmoment-Steuerungsermittlungseinrichtung ermittelt, dass die Drehmoment-Heruntersteuerung **durch** eine Zündungszeitverzögerungssteuerung nicht möglich ist.

7. Fahrzeugmotor-Steuerapparat gemäß einem der Ansprüche 1 bis 6, **dadurch gekennzeichnet, dass**
die Motordrehmoment-Steuereinrichtung folgendes aufweist: ein Drosselventil (2), welches einen Einlaßluftfluß in den Motor steuert; und
eine Drosselventilöffnungs-Steuerungseinrichtung (68) zur Steuerung einer Öffnung des Drosselventils (2), worin eine Drehmoment-Heruntersteuerung des Motors (1) mittels der Drosselventilöffnungs-Steuereinrichtung (68) durchgeführt wird, welche die Öffnung des Drosselventils auf eine Öffnung steuert, die geringer als eine normale Öffnung ist, die einem Wert des Herunterdrückens eines Gaspedals entspricht.

8. Fahrzeugmotor-Steuerapparat gemäß einem der Ansprüche 1 bis 7, **gekennzeichnet durch**
eine Fehlererfassungseinrichtung zum Erfassen eines Fehlers der Motordrehmoment-Steuereinrichtung;
worin die Motordrehmoment-Ermittlungseinrichtung ermittelt, dass es nicht möglich ist, das Drehmoment des Motors zu steuern, wenn der Fehler der Fehlererfassungseinrichtung **durch** die Fehlererfassungseinrichtung erfasst wird.

9. Fahrzeugmotor-Steuerapparat gemäß einem der zuvor genannten Ansprüche, **dadurch gekennzeichnet, dass**
die Motordrehmoment-Steuereinrichtung (65, 68) automatisch das Drehmoment des Motors (1) steuert, um einen Eingriffstoß zu reduzieren, welcher verursacht wird, wenn die in dem Drehmoment-Übertragungszweig bzw. Drehmoment-Getriebezweig vorgesehene Kupplung (C1, C2) eingreift.

10. Fahrzeugmotor-Steuerapparat gemäß Anspruch 9, **dadurch gekennzeichnet, dass**
die Kupplung (C1, C2) durch Anwenden eines Druckes in Eingriff gebracht wird, welcher mittels einer Fluiddruckquelle (4) erzeugt wird, was mittels der Leistung des Motors (1) vollzogen und mittels einer Fluiddrucksteuereinrichtung (16) gesteuert wird.

11. Fahrzeugmotor-Steuerapparat gemäß einem der Ansprüche 3 bis 9, **dadurch gekennzeichnet, dass** die Motorsteuereinrichtung (S7) einen automatischen Stopp des Motors (1) abbricht, während die Bremskraftsteuereinrichtung (S5) das Bremsen des Fahrzeuges fortführt, wenn mittels der Drehmoment-Steuerungsermittlungseinrichtung (S3) ermittelt wurde, dass es nicht möglich ist, das Drehmoment des Motors zu steuern, und mittels der Anlaufanforderungs-Ermittlungseinrichtung (60) keine Anlaufanforderung ermittelt wurde während einer automatischen Stoppsteuerung des Motors (1).

## Revendications

1. Dispositif de commande de moteur de voiture destiné à un véhicule dans lequel un moteur (1) est automatiquement arrêté lors de l'établissement d'une condition d'arrêt prédéterminée, et le moteur (1) est redémarré à partir d'un état automatiquement arrêté lors de l'établissement d'une condition de redémarrage prédéterminée, et dans lequel au moment du redémarrage du moteur (1), un couple du moteur (1) est transmis en enclenchant un embrayage (C1, C2) prévu dans un trajet de transmission de couple, comprenant :
un moyen de commande de couple de moteur (65, 68) destiné à commander le couple du moteur (1),
un moyen de détermination de commande de couple (S3, S10) destiné à déterminer s'il est possible de commander le couple du moteur (1) en utilisant le moyen de commande de couple de moteur (65, 68), et
un moyen de commande de moteur (S7, S11) destiné à faire cesser ou interdire un arrêt automatique du moteur (1) s'il est déterminé par le moyen de détermination de commande de couple (S3, S10) qu'il est impossible de commander le couple du moteur (1).

2. Dispositif de commande de moteur de véhicule selon la revendication 1, **caractérisé par** un dispositif de freinage (69) qui génère une force de freinage pour le véhicule(1), et
un moyen de commande de force de freinage (S2, S5) qui freine le véhicule en utilisant le dispositif de freinage (69) au moment de l'arrêt automatique du moteur (1).

3. Dispositif de commande de moteur de véhicule selon la revendication 2, **caractérisé par** un moyen de détermination de demande de lancement (60) destiné, si la condition de redémarrage prédéterminée est établie durant l'état automatiquement arrêté du moteur (1), à déterminer s'il existe une demande de lancement de véhicule,
dans lequel si la condition de redémarrage de moteur est établie, le moyen de commande de force de freinage (S2, S5) commande le dispositif de freinage (69) sur la base d'une détermination réalisée par le moyen de détermination de demande de lancement (60) en ce qui concerne le fait qu'il existe la demande de lancement de véhicule.

4. Dispositif de commande de moteur de véhicule selon la revendication 3, **caractérisé en ce que** le moyen de détermination de demande de lancement (60) détermine s'il existe la demande de lancement de véhicule sur la base du fait qu'il existe un enfoncement de la pédale d'accélérateur (59).

5. Dispositif de commande de moteur de véhicule selon l'une quelconque des revendications 1 à 4, **caractérisé en ce que** le moyen de commande de couple de moteur comprend :
un dispositif d'allumage (65) qui enflamme un mélange air-carburant dans un cylindre du moteur, et
un moyen de commande du calage d'allumage destiné à commander un calage de l'allumage du dispositif d'allumage (65),
dans lequel une commande de réduction de couple du moteur (1) est exécutée par le moyen de commande de calage d'allumage retardant le calage de l'allumage du dispositif d'allumage (65) par rapport à un calage optimal.

6. Dispositif de commande de moteur de véhicule selon la revendication 5, **caractérisé par** un détecteur de température de catalyseur (58) qui détecte une température d'un catalyseur,
dans lequel si la température du catalyseur détectée par le détecteur de température de catalyseur (58) est inférieure à une valeur prédéterminée, le moyen de détermination de commande de couple détermine que la commande de diminution de couple par l'intermédiaire d'une commande de retard de calage de l'allumage est impossible.

7. Dispositif de commande de moteur de véhicule selon l'une quelconque des revendications 1 à 6, **caractérisé en ce que** le moyen de commande de couple de moteur comprend :
un papillon des gaz (2) qui commande un écoulement d'air d'admission dans le moteur, et
un moyen de commande d'ouverture de papillon des gaz (68) destiné à commander l'ouverture du papillon des gaz (2),
dans lequel une commande de diminution de couple du moteur (1) est exécutée par le moyen de commande d'ouverture du papillon des gaz (68) commandant l'ouverture du papillon des gaz vers une ouverture qui est plus petite qu'une ouverture normale correspondant à une quantité d'enfoncement de la pédale d'accélérateur.

8. Dispositif de commande de moteur de véhicule selon l'une quelconque des revendications 1 à 7, **caractérisé par** un moyen de détection de défaillance destiné à détecter une défaillance du moyen de commande de couple de moteur,
dans lequel le moyen de détermination de couple de moteur détermine qu'il est impossible de commander le couple du moteur lorsque la défaillance du moyen de détection de défaillance est détectée par le moyen de détection de défaillance.

9. Dispositif de commande de moteur de véhicule selon l'une quelconque des revendications précédentes, **caractérisé en ce que** le moyen de commande de couple de moteur (65, 68) commande automatiquement le couple du moteur (1) de manière à réduire un choc d'enclenchement provoqué lors de l'enclenchement de l'embrayage (C1, C2) prévu dans le trajet de transmission de couple.

10. Dispositif de commande de moteur de véhicule selon la revendication 9, **caractérisé en ce que** l'embrayage (C1, C2) est enclenché en appliquant une pression qui est produite par une source de pression de fluide (4) mise en oeuvre par la puissance du moteur (1) et qui est commandée par un dispositif de commande de pression de fluide (16).

11. Dispositif de commande de moteur de véhicule selon l'une quelconque des revendications 3 à 9, **caractérisé en ce que** le moyen de commande de moteur (S7) cesse un arrêt automatique du moteur (1) bien que le moyen de commande de force de freinage (S5) continue à freiner le véhicule lorsqu'il a été déterminé par le moyen de détermination de commande de couple (S3) qu'il est impossible de commander le couple du moteur, et aucune demande de lancement n'a été déterminée par le moyen de détermination de demande de lancement (60), durant une commande d'arrêt automatique du moteur (1).
